# EUROPEAN PATENT APPLICATION

(11) **EP 3 974 488 A1**
(43) Date of publication of application: **30.03.2022**
(21) Application number: 20810742.5
(22) Date of filing: 20.05.2020
(51) Int. Cl.: C09J 5/00, C09J 11/08, C09J 201/00, C09J 7/30

(54) **ADHESIVE COMPOSITION**

(30) Priority: 20.05.2019 JP 2019094366
(71) Applicant: SUMITOMO SEIKA CHEMICALS CO., LTD., Kako-gun, Hyogo 675-0145 (JP)
(72) Inventor: KAKUTAKA, Kairi, Kako-gun, Hyogo 675-0145 (JP); YAMAMOTO, Katsumasa, Kako-gun, Hyogo 675-0145 (JP)
(74) Representative: Mewburn Ellis LLP
(86) International application number: PCT/JP2020/019914
(87) International publication number: WO 2020/235588

(57) **Abstract**

There is provided an adhesive composition having both high adhesion force and stable adhesion performance. An adhesive composition comprising, per 100 parts by mass of a curable resin (A), 1 part by mass or more and 80 parts by mass or less of substantially spherical organic particles (B), wherein the adhesive composition is used in an application amount of 5 mg/cm² or more and 500 mg/cm² or less on an adherend.

## Description

### Technical Field

The present invention relates to an adhesive composition.

### Background Art

Conventionally, various adhesive compositions have been used in various industrial fields, such as the automobile and electronic materials industries. Adhesive compositions used in such industrial fields require stable adhesion performance, in addition to high adhesion force on adherends, such as metal materials. "Stable adhesion performance" specifically refers to the property such that there is a small variation in the magnitude of the external force at which an adherend is removed, and the adherend is adhered until the external force applied to a cured product of the adhesive composition exceeds a certain magnitude, and when the magnitude is exceeded, the adhered adherend is removed.

Failure modes of the cured product of the adhesive composition upon removal of the adherend are known as adhesive fracture, cohesive failure, and a combination thereof. It is known that the adhesion performance is stable when the failure mode of the cured product of the adhesive composition due to an external force is cohesive failure (see Patent Literature 1, for example). In contrast, when the failure mode of the cured product of the adhesive composition is adhesive failure, even if the adhesive composition has high adhesion force on the adherend, the adhesion performance is not stable because of a large variation in the external force at which removal occurs at the interface between the cured product of the adhesive composition and the adherend.

For example, Patent Literature 1 discloses an adhesive composition comprising an epoxy resin, a curing agent, and a filler, wherein the filler is a mixture of calcium carbonate and talc, and the ratio of the talc in the filler is 2% by weight or more and 10% by weight or less. The adhesive composition is described as achieving high adhesion strength and stable adhesion force, as well as having excellent heat resistance and water resistance.

For example, Patent Literature 2 discloses an adhesive comprising a polysulfide-modified epoxy resin having a specific structure, a triazine amine, and an inorganic filler. The adhesive is described as having high elongation while retaining an adhesion strength comparable to that of epoxy resins.

### Citation List

### Patent Literature

Patent Literature 1: JP H 5-295340 A
Patent Literature 2: JP H 7-97556 A

### Summary of Invention

### Technical Problem

It is a main object of the present invention to provide an adhesive composition having both high adhesion force and stable adhesion performance.

### Solution to Problem

The present inventors have conducted extensive research to solve the aforementioned problem. As a result, they have found that an adhesive composition containing, relative to a curable resin, a predetermined amount of substantially spherical organic particles, wherein the application amount of the adhesive composition on an adherend is set in a specific range, has both high adhesion force and stable adhesion performance (specifically, the failure mode of the cured product of the adhesive composition is cohesive failure). The present invention has been completed by further conducting extensive research, based on these findings.

### Advantageous Effects of Invention

The present invention can provide an adhesive composition having both high adhesion force and stable adhesion performance. The adhesive composition of the present invention can be suitably used for adhesive applications for which adhesive compositions in various industrial fields have been used, such as, for example, structural materials, composite materials, automobiles, electronic materials, carbon fiber composite materials, semiconductors, potting materials, substrate materials, lamination materials, coating materials, and paints. In particular, the adhesive composition of the present invention is suitable for use as an adhesive composition to be adhered to parts formed of metal materials such as iron, stainless steel, and aluminum alloys as adherends.

### Description of Embodiments

An adhesive composition of the present invention has a feature in that it comprises, per 100 parts by mass of a curable resin (A), 1 part by mass or more and 80 parts by mass or less of substantially spherical organic particles (B), wherein the adhesive composition is used in an application amount of 5 mg/cm² or more and 500 mg/cm² or less on an adherend. The adhesive composition of the present invention, which comprises the curable resin and the substantially spherical organic particles in the predetermined ratio, and is used on an adherend in the specific application amount, can have both high adhesion force and stable adhesion performance.

The adhesive composition of the present invention will be hereinafter described in detail. It should be noted that the curable resin is referred to herein as "curable resin (A)", and the substantially spherical organic particles are referred to herein as "substantially spherical organic particles (B)".

As used herein, the term "comprising" includes "consisting essentially of" and "consisting of".

As used herein, a set of values connected with "to" refers to the numerical range including the values before and after "to" as the lower and upper limits. When a plurality of lower limits and a plurality of upper limits are mentioned separately, a lower limit and an upper limit may be arbitrarily selected, and connected with "to".

The adhesive composition of the present invention is used in an application amount of 5 to 500 mg/cm² on an adherend. From the viewpoint of more effectively imparting both high adhesion force and stable adhesion performance to the adhesive composition, the application amount of the adhesive composition is preferably 5 to 400 mg/cm², more preferably 5 to 300 mg/cm², even more preferably 10 to 300 mg/cm², and particularly preferably 30 to 250 mg/cm². If the application amount is less than 5 mg/cm², depending on the type of substantially spherical organic particles, the particles may become spacers, and cannot be uniformly dispersed per unit area, which causes the adhesion strength to decrease, and makes it difficult to control the failure mode. Conversely, if the application amount exceeds 500 mg/cm², the potential stress after curing tends to increase, and thus, the adhesion strength tends to decrease, or the failure mode tends to be difficult to control.

### <Curable Resin (A)>

Examples of the curable resin (A) include thermosetting resins and photocurable resins. The curing mode of the curable resin is not limited as long as it does not interfere with the effects of the present invention.

Examples of preferred curable resins (A) include epoxy resins, acrylic resins, and silicone resins. These curable resins may be known ones, such as epoxy resin-based adhesives, acrylic resin-based adhesives, and silicone resin-based adhesives. A single curable resin (A) or two or more curable resins (A) may be contained in the adhesive composition of the present invention.

Epoxy resins are not limited as long as they have epoxy groups, and can be cured, for example, monoepoxy compounds and polyepoxy compounds.

Specific examples of monoepoxy compounds include butyl glycidyl ether, hexyl glycidyl ether, phenyl glycidyl ether, allyl glycidyl ether, p-butylphenyl glycidyl ether, p-xylyl glycidyl ether, glycidyl acetate, glycidyl butyrate, glycidyl hexoate, and glycidyl benzoate.

Examples of polyepoxy compounds include bisphenol-type epoxy resins, epoxy resins obtained by glycidylating polyhydric phenol compounds, novolac-type epoxy resins, aliphatic ether-type epoxy resins, ether ester-type epoxy resins, ester-type epoxy resins, amine-type epoxy resins, and cycloaliphatic epoxy resins.

Specific examples of bisphenol-type epoxy resins include epoxy resins obtained by glycidylating bisphenols such as bisphenol A, bisphenol F, bisphenol AD, bisphenol S, tetramethylbisphenol A, tetramethylbisphenol F, tetramethylbisphenol AD, tetramethylbisphenol S, tetrabromobisphenol A, tetrachlorobisphenol A, and tetrafluorobisphenol A.

Specific examples of epoxy resins obtained by glycidylating polyhydric phenol compounds include epoxy resins obtained by glycidylating dihydric phenol compounds such as biphenol, dihydroxynaphthalene, and 9,9-bis(4-hydroxyphenyl)fluorene; epoxy resins obtained by glycidylating trisphenol compounds such as 1,1,1-tris(4-hydroxyphenyl)methane; and epoxy resins obtained by glycidylating tetrakisphenol compounds such as 1,1,2,2-tetrakis(4-hydroxyphenyl)ethane.

Specific examples of novolac-type epoxy resins include epoxy resins obtained by glycidylating novolac compounds such as phenol novolac-type, cresol novolac-type, bisphenol A novolac-type, brominated phenol novolac-type, brominated bisphenol A novolac-type, and other novolac compounds.

Specific examples of aliphatic ether-type epoxy resins include epoxy resins obtained by glycidylating polyhydric alcohols such as glycerin and polyethylene glycol.

Specific examples of ether ester-type epoxy resins include epoxy resins obtained by glycidylating hydroxycarboxylic acids such as p-hydroxybenzoic acid.

Specific examples of ester-type epoxy resins include epoxy resins obtained by glycidylating polycarboxylic acids such as phthalic acid and terephthalic acid.

Specific examples of amine-type epoxy resins include epoxy resins obtained by glycidylating amine compounds such as 4,4'-diaminodiphenylmethane and m-aminophenol.

Specific examples of cycloaliphatic epoxy resins include 3,4-epoxycyclohexylmethyl-3',4'-epoxycyclohexane carboxylate, 1,2-epoxy-4-vinylcyclohexane, bis(3,4-epoxycyclohexylmethyl)adipate, 1-epoxyethyl-3,4-epoxycyclohexane, limonen diepoxide, and 3,4-epoxycyclohexylmethanol.

Preferred among these epoxy resins are bisphenol-type epoxy resins; in particular, bisphenol A-type epoxy resins, bisphenol F-type epoxy resins, and the like are suitably used.

Acrylic resins are not limited as long as they have (meth)acryloyl groups, and can be cured, for example, thermosetting acrylic resins and photocurable acrylic resins. As used herein, "(meth)acryloyl group" refers to an acryloyl group or a methacryloyl group.

Thermosetting acrylic resins and photocurable acrylic resins are each resin compositions formed to contain an acrylic monomer, oligomer, or higher structural unit. These resins may be produced using known methods, or may be commercial acrylic resin compositions. Examples of acrylic monomers include (meth)acrylic acid and (meth)acrylic acid esters.

Examples of (meth)acrylic acid esters include monofunctional (meth)acrylic acid esters, such as methyl (meth)acrylate, ethyl (meth)acrylate, n-propyl (meth)acrylate, isopropyl (meth)acrylate, n-butyl (meth)acrylate, sec-butyl (meth)acrylate, tert-butyl (meth)acrylate, 2-methylbutyl (meth)acrylate, 2-ethylbutyl (meth)acrylate, 3-methylbutyl (meth)acrylate, 1,3-dimethylbutyl (meth)acrylate, pentyl (meth)acrylate, hexyl (meth)acrylate, cyclohexyl (meth)acrylate, 2-ethylhexyl (meth)acrylate, heptyl (meth)acrylate, octyl (meth)acrylate, 2-methoxyethyl acrylate, 2-ethoxyethyl acrylate, 3-ethoxypropyl acrylate, 2-ethoxybutyl acrylate, 3-ethoxybutyl acrylate, hydroxyethyl (meth)acrylate, hydroxypropyl (meth)acrylate, hydroxybutyl (meth)acrylate, phenyl (meth)acrylate, benzyl (meth)acrylate, phenylethyl (meth)acrylate, phenoxyethyl (meth)acrylate, (2-methyl-2-ethyl-1,3-dioxolan-4-yl)methyl (meth)acrylate, isobornyl (meth)acrylate, ethoxylated O-phenylphenol (meth)acrylate, cyclic trimethylolpropane formal (meth)acrylate, tetrahydrofurfuryl (meth)acrylate, trifluoroethyl (meth)acrylate, (5-ethyl-1,3-dioxan-5-yl)methyl (meth)acrylate, glycidyl (meth)acrylate, 2-[2-hydroxy-5-[2-((meth)acryloyloxy)ethyl)phenyl]-2H-benzotriazole, 4-(meth)acryloyloxybenzophenone, phenylbenzyl (meth)acrylate, phenylthioethyl (meth)acrylate, o-phenylphenoxyethyl (meth)acrylate, naphthylthioethyl (meth)acrylate, and biphenylmethyl (meth)acrylate; and polyfunctional (meth) acrylic acid esters, such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, polypropylene glycol di(meth)acrylate, dipropylene glycol di(meth)acrylate, tripropylene glycol di(meth)acrylate, 1,3-butanediol di(meth)acrylate, 1,4-butanediol di(meth)acrylate, 1,5-pentanediol di(meth)acrylate, 1,6-hexanediol di(meth)acrylate, ethoxylated bisphenol A di(meth)acrylate, tricyclodecanedimethanol di(meth)acrylate, 9,9-bis[4-(2-(meth)acryloyloxyethoxy)phenyl]fluorene, trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, isocyanurate tri(meth)acrylate, ethoxylated isocyanurate tri(meth)acrylate, glycerin triacrylate, urethane (meth)acrylates, epoxy (meth)acrylates, polyester (meth)acrylates, polyether (meth)acrylates, and silicone (meth)acrylates.

Examples of commercial acrylic resin compositions include the HITALOID series (manufactured by Hitachi Chemical Co., Ltd.) such as HITALOID 7909-1, HITALOID 7902-1, HITALOID 7100, HITALOID 7200, HITALOID 7902A, HITALOID 7975, HITALOID 7903-B, HITALOID 7663, HITALOID 7927, HITALOID 7927-15, HITALOID 7100, and HITALOID 7975D, the FINETACK CT series, and the QUICKMASTER SPS series (manufactured by DIC Corporation), which are urethane acrylates, acrylic resin acrylates, or epoxy acrylates.

Silicone resins are not limited as long as they are used as silicone resin-based adhesives, for example, addition-curing silicone resin-based adhesives and condensation-curing silicone resin-based adhesives, and may be generally known ones.

Examples of commercial addition-curing silicone resin mixtures include the IVS and XE series (manufactured by Momentive Performance Materials, Inc.), the KE, KER, SCR, and ASP series (manufactured by Shin-Etsu Chemical Co., Ltd.), and the OE, EG, JCR, and SR series (manufactured by Dow Corning Toray Co., Ltd.).

Examples of commercial condensation-curing silicone resin mixtures include the one-component condensation acetone-type series including KE-3423 (manufactured by Shin-Etsu Chemical Co., Ltd.), the one-component condensation alcohol-type series including KE-4895 (manufactured by Shin-Etsu Chemical Co., Ltd.), and the two-component condensation acetone-type series including KE-200 (manufactured by Shin-Etsu Chemical Co., Ltd.).

### <Curing Agent that Can Be Contained in Adhesive Composition>

When the adhesive composition of the present invention contains an epoxy resin as the curable resin (A), it may also contain a curing agent in addition to the curable resin (A) and the substantially spherical organic particles (B). The curing agent is not limited as long as it can react with the curable resin (A) (epoxy resin) to give a cured product. A single curing agent may be used, or a mixture of two or more curing agents may be used.

Examples of curing agents include amine-based curing agents, amide-based curing agents, acid anhydride-based curing agents, phenol-based curing agents, mercaptan-based curing agents, isocyanate-based curing agents, active ester-based curing agents, and cyanate ester-based curing agents.

Examples of amine-based curing agents include chain aliphatic amines such as ethylenediamine, diethylenetriamine, triethylenetetramine, and tetraethylenepentamine; cycloaliphatic amines such as isophoronediamine, benzenediamine, bis(4-aminocyclohexyl)methane, bis(aminomethyl)cyclohexane, and diaminodicyclohexylmethane; aromatic amines such as metaphenylenediamine, diaminodiphenylmethane, diethyltoluenediamine, and diaminodiethyldiphenylmethane; and secondary amines such as piperidine.

Examples of amide-based curing agents include dicyandiamide and derivatives thereof, and polyamide resins (such as polyaminoamide).

Examples of acid anhydride-based curing agents include aliphatic acid anhydrides such as maleic anhydride and dodecenylsuccinic anhydride; aromatic acid anhydrides such as phthalic anhydride, trimellitic anhydride, and pyromellitic dianhydride; and cycloaliphatic acid anhydrides such as methylnadic anhydride, tetrahydrophthlic anhydride, methyltetrahydrophthalic anhydride, hexahydrophthalic anhydride, and 4-methylhexahydrophthahic anhydride.

Examples of phenol-based curing agents include phenol novolac resins, cresol novolac resins, biphenyl-type novolac resins, triphenylmethane-type phenol resins, naphthol novolac resins, phenol biphenylene resins, phenol aralkyl resins, biphenylaralkyl-type phenol resins, modified polyphenylene ether resins, and compounds with a benzoxazine ring.

Examples of mercaptan-based curing agents include trimethylolpropane tris(3-mercaptopropionate), tris-[(3-mercaptopropionyloxy)-ethyl]-isocyanurate, pentaerythritol tetrakis(3-mercaptopropionate), tetraethyleneglycol bis(3-mercaptopropionate), pentaerythritol tetrakis(3-mercaptobutyrate), 1,4-bis(3-mercaptobutyryloxy)butane, trimethylolpropane tris(3-mercaptobutyrate), trimethylolethane tris(3-mercaptobutyrate), and polysulfide polymers.

Examples of isocyanate-based curing agents include hexamethylene diisocyanate, 1,4-tetramethylene diisocyanate, 2-methylpentane-1,5-diisocyanate, lysine diisocyanate, isophorone diisocyanate, and norbornane diisocyanate.

Examples of active ester-based curing agents include compounds having, per molecule, one or more ester groups reactive with the curable resin (A), for example, phenol esters, thiophenol esters, N-hydroxyamine esters, and heterocyclic hydroxy compound esters.

Examples of cyanate ester-based curing agents include novolac-type cyanate resins, and bisphenol-type cyanate resins, such as bisphenol A-type cyanate resin, bisphenol E-type cyanate resin, and tetramethylbisphenol F-type cyanate resin.

In the adhesive composition of the present invention, the amount of the curing agent to be used is not limited. The amount of the curing agent to be used is preferably such that the equivalent amount of reactive functional groups in the curing agent is 0.1 to 5 equivalents, per equivalent of reactive functional groups (epoxy groups) in the entire curable resin (A). The equivalent amount of reactive functional groups in the curing agent is more preferably 0.3 to 3 equivalents, and even more preferably 0.5 to 2 equivalents.

### <Curing Accelerator That May Be Contained in Adhesive Composition)

When the adhesive composition of the present invention contains an epoxy resin as the curable resin (A), it may also contain a curing accelerator, in addition to the curable resin (A) and the substantially spherical organic particles (B). When the curing accelerator is used in combination with the curing agent, it can increase the curing reaction rate, or increase the strength of the resulting cured product. The curing accelerator can accelerate curing of the curable resin (A), even if it is not used in combination with the curing agent. A single curing accelerator may be used, or a mixture of two or more curing accelerators may be used.

Examples of curing accelerators include imidazole compounds such as imidazole, 2-methylimidazole, 2-ethylimidazole, 2-ethyl-4-methylimidazole, and 2-phenylimidazole; tertiary amines such as DBU (1,8-diazabicyclo(5,4,0)-undecene-7), DBN (1,5-diazabicyclo(4,3,0)-nonene-5), 2,4,6-tris(dimethylaminomethyl)phenol, benzyl dimethylamine, triethylenediamine, and 2-(dimethylaminomethyl)phenol; phosphorus compounds, Lewis acid compounds, and cationic polymerization initiators.

In the adhesive composition of the present invention, it is preferred to use at least one curing agent selected from the group consisting of amine-based curing agents, acid anhydride-based curing agents, dicyandiamide, and phenol-based curing agents, and use at least one curing accelerator selected from the group consisting of imidazole compounds, tertiary amines, phosphorus-based compounds, and cationic polymerization initiators.

In the adhesive composition of the present invention, the amount of the curing accelerator to be used is not limited. For example, the curing accelerator is preferably used in an amount of 0.01 to 10 parts by mass per 100 parts by mass of the curable resin (A). The amount of the curing accelerator to be used is more preferably 0.1 to 5 parts by mass, and even more preferably 0.5 to 3 parts by mass, per 100 parts by mass of the curable resin (A).

### <Radical Polymerization Initiator That May be Contained in Adhesive Composition>

When the adhesive composition of the present invention contains an acrylic resin as the curable resin (A), it may contain, in addition to the curable resin (A) and the substantially spherical organic particles (B), a radical polymerization initiator for the purpose of allowing the curing of the acrylic resin to proceed by the radical polymerization reaction. The radical polymerization initiator may be a photoradical polymerization initiator, a thermal radical polymerization initiator, or a combination thereof.

Examples of photoradical polymerization initiators include benzoin compounds such as benzoin, benzoin methyl ether, benzoin ethyl ether, and benzoin isopropyl ether, and alkyl ether-based compounds thereof; alkylphenone compounds such as 2,2-dimethoxy-2-phenylacetophenone, 1-hydroxycyclohexylphenyl ketone, 2-hydroxy-2-methylpropiophenone, 2-hydroxy-4'-(2-hydroxyethoxy)-2-methylpropiophenone, 1,1'-(methylene-di-4,1-phenylene)bis[2-hydroxy-2-methyl-1-propanone] 2-methyl-4'-(methylthio)-2-morpholinopropiophenone, and 2-benzyl-2-(dimethylamino)-4'-morpholinobutyrophenone; acylphosphine oxide compounds such as 2,4,6-trimethylbenzoyl-diphenylphosphine oxide and bis(2,4,6-trimethylbenzoyl)phenylphosphine oxide; intramolecular hydrogen abstraction-type compounds such as methyl benzoylformate; and oxime ester compounds such as 1-[4-(phenylthio)phenyl]octane-1,2-dione=2-(o-benzoyloxime) and 1-[9-ethyl-6-(2-methylbenzoyl)-9H-carbazol-3-yl]ethanone=1-(O-acetyloxime). These photoradical polymerization initiators may be used alone or in combination.

Examples of thermal radical polymerization initiators include azobisisobutyronitrile, benzoyl peroxide, tert-butyl peroxypivalate, tert-butyl peroxyneohexanoate, tert-hexyl peroxyneohexanoate, tert-butyl peroxyneodecanoate, tert-hexyl peroxyneodecanoate, cumyl peroxyneohexanoate, cumyl peroxyneodecanoate, and 1,1,3,3,-tetramethylbutyl peroxy-2-ethylhexanoate. These thermal radical polymerization initiators may be used alone or in combination.

### <Catalyst That May Be Contained in Adhesive Composition>

When the adhesive composition of the present invention contains a silicone resin as the curable resin (A), it may contain, in addition to the curable resin (A) and the substantially spherical organic particles (B), a catalyst for the purpose of allowing the curing to proceed by the catalytic reaction.

The catalyst may be any conventionally known curing catalyst for silicone resins. Specific examples of such catalysts include platinum group metal elements such as platinum (including platinum black), rhodium, and palladium; platinum chloride, chloroplatinic acid, and chloroplatinic acid salts such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂, and Na₂HPtCl₄·nH₂O (wherein n is an integer from 0 to 6, preferably an integer of 0 or 6); tin, titanium, and amine compounds. A single catalyst may be used, or two or more catalysts may be used.

### <Substantially Spherical Organic Particles (B)>

The substantially spherical organic particles (B) are organic particles with a substantially spherical particle shape, such as a spherical or ellipsoidal shape. The substantially spherical shape of the organic particles can be confirmed with an electron microscope, for example.

In the adhesive composition of the present invention, the substantially spherical organic particles (B) are contained in an amount of 1 to 80 parts by mass, per 100 parts by mass of the curable resin (A).

From the viewpoint of more effectively imparting both high adhesion force and stable adhesion performance to the adhesive composition, the substantially spherical organic particles (B) are preferably contained in an amount of 5 to 80 parts by mass, more preferably 10 to 80 parts by mass, per 100 parts by mass of the curable resin (A).

The substantially spherical organic particles (B) preferably have an average degree of circularity of 0.6 or more, more preferably 0.7 or more, even more preferably 0.8 or more, and particularly preferably 0.85 or more. The substantially spherical organic particles (B) preferably have an average particle diameter of 1 to 50 µm, more preferably 2 to 50 µm. As described below, the average degree of circularity of the substantially spherical organic particles (B) refers to the value as measured using an image analysis-type particle size distribution measurement apparatus. As described below, the average particle diameter refers to the volume average particle diameter as determined by the electrical sensing zone method (pore electrical resistance method).

From the viewpoint of more effectively imparting both high adhesion force and stable adhesion performance to the adhesive composition, the substantially spherical organic particles (B) are preferably thermoplastic, and may be a thermoplastic resin powder or a powder obtained by processing a commercial thermoplastic resin. The thermoplastic resin is preferably composed of at least one resin selected from the group consisting of polyolefin resins, polyester resins, polyether resins, polyamide resins, acrylic resins, and thermoplastic urethane resins, and is more preferably composed of at least one resin selected from the group consisting of polyolefin resins, polyester resins, polyether resins, polyamide resins, and acrylic resins. Specific examples of particularly preferred substantially spherical organic particles (B) include polyamide rubber elastomer powders, copolymer nylon powders, and polyolefin resin powders. A single type of substantially spherical organic particles (B) or two or more types of substantially spherical organic particles (B) may be contained in the adhesive composition of the present invention. The following provides a more detailed description of the case where the substantially spherical organic particles (B) are a polyamide rubber elastomer powder, a copolymer nylon powder, a polyolefin resin powder, or an acrylic resin powder.

### (Polyamide Rubber Elastomer Powder)

The polyamide rubber elastomer powder is composed of the powder of a polyamide rubber elastomer. The polyamide rubber elastomer is an elastomer composed of a polyamide rubber. The polyamide rubber elastomer preferably exhibits the property of having rubber elasticity at room temperature, and becoming plastic at a high temperature (property similar to that of a thermoplastic resin).

While the polyamide rubber elastomer is not limited in structure, it preferably has a polymer structure. The polyamide rubber elastomer is preferably composed of a soft polymer structure, or composed of a combined structure of a hard polymer segment and a soft polymer segment.

The polyamide rubber elastomer powder preferably has an amide unit and an ether unit. Specifically, the polyamide rubber elastomer powder preferably includes a structure represented by the following general formula (1):

-[(A)-(X)-(E)]- (1)

In the general formula (1), (A) denotes an amide unit; (E) denotes an ether unit; and (X) denotes a linking group that binds the amide unit and the ether unit.

Each of the amide unit and the ether unit may be a monomer unit or a polymer unit. When the amide unit is a polymer unit, (A) constitutes a polyamide block. When the ether unit is a polymer unit, (E) constitutes a polyether block.

The polyamide rubber elastomer powder may include a single structure, or two or more structures represented by the general formula (1). For example, the polyamide rubber elastomer powder may be composed of a block copolymer in which the polyamide block and the polyether block are bound with the linking group, or may be composed of a copolymer in which structure(s) (single structure, or two or more structures) represented by the general formula (1) are bound.

As described below, in the polyamide rubber elastomer powder, the polyamide block tends to constitute the hard polymer segment, and the polyether block tends to constitute the soft polymer segment.

The polyamide rubber elastomer powder is preferably a block copolymer having a structure of the general formula (1), wherein (A) is a polyamide block; (E) is a polyether block; and (A) and (E) are bound with the linking group. While not wishing to be construed in any restricted manner, it is believed that with this structure, the polyamide block constituting the hard polymer segment and the polyether block constituting the soft polymer segment can function favorably to impart high adhesion force and stable adhesion performance to the adhesive composition of the present invention.

Examples of monomers constituting the amide unit include lactam compounds, aminocarboxylic acid compounds, and salts of diamine compounds and dicarboxylic acid compounds. The amide unit may be composed of a single monomer or two or more monomers.

Examples of lactam compounds include ε-caprolactam, ω-enantholactam, and ω-lauryllactam.

Examples of aminocarboxylic acid compounds include 6-aminocaproic acid, 7-aminoheptanoic acid, 9-aminononanoic acid, 11-aminoundecanoic acid, and 12-aminododecanoic acid.

Examples of diamine compounds in a salt of a diamine compound and a dicarboxylic acid compound include ethylenediamine, triethylenediamine, tetraethylenediamine, pentamethylenediamine, hexamethylenediamine, 1,7-diaminoheptane, 1,8-diaminooctane, 1,9-diaminononane, 1,10-diaminodecane, phenylenediamine, and m-xylylenediamine. Examples of dicarboxylic acid compounds include oxalic acid, succinic acid, glutaric acid, adipic acid, pimelic acid, sebacic acid, terephthalic acid, isophthalic acid, suberic acid, azelaic acid, nonanedicarboxylic acid, decanedicarboxylic acid, tetradecanedicarboxylic acid, octadecanedicarboxylic acid, fumaric acid, phthalic acid, xylylene dicarboxylic acid, and dimer acids (unsaturated dicarboxylic acids with 36 carbon atoms, synthesized from unsaturated fatty acids such as linoleic acid or oleic acid as a main component). The salt of diamine compound and dicarboxylic acid compound is preferably a salt of a diamine compound and a dicarboxylic acid compound, and more preferably a salt of one selected from the group consisting of ethylenediamine, triethylenediamine, tetraethylenediamine, and hexamethylenediamine and one selected from the group consisting of oxalic acid, succinic acid, glutaric acid, adipic acid, pimelic acid, sebacic acid, terephthalic acid, and isophthalic acid.

Examples of monomers constituting the ether unit include glycol compounds. The ether unit may also be a diamine compound having a polyether chain, for example.

Examples of glycol compounds include polyethylene oxide glycol, polypropylene oxide glycol, polytetramethylene oxide glycol, and polyhexamethylene oxide glycol. Examples of the diamine compound having a polyether chain include polyether diamine.

The structure of the linking group ((X) in the general formula (1)) that binds the amide unit and the ether unit is -CO-NH- or -CO-O-, for example, and is preferably -CO-NH-.

In the polyamide rubber elastomer powder, the copolymer in which the linking group has the structure "-CO-NH-" is referred to as a polyether block amide copolymer, and the copolymer in which the linking group has the structure "-CO-O-" is referred to as a polyether ester block amide copolymer. Specifically, when these copolymers are expressed using the general formula (1), examples of the block copolymer in which the polyamide block and the polyether block are bound via the linking group (E) include a polyether block amide copolymer represented by the following general formula (11) and a polyether ester block amide copolymer represented by the following general formula (12):

-[(A)-(CO-NH)-(E)]- (11)

-[(A)-(CO-O)-(E)]- (12)

In the general formulae (11) and (12), (A) denotes a polyamide block; and (E) denotes a polyether block.

While not wishing to be construed in any restricted manner, it is believed that when the polyamide rubber elastomer powder is a block copolymer including the polyamide block and the polyether block, it has a combined structure of a hard polymer segment (also referred to as a hard segment) having the polyamide block and a soft polymer segment (also referred to as a soft segment) having the polyether block. It is believed that the hard polymer segment is crystalline and has a high melting point, and the soft polymer segment is amorphous and has a low glass transition temperature. It is believed that because of these properties, the polyamide block constituting the hard polymer segment and the polyether block constituting the soft polymer segment can function favorably to impart high adhesion force and stable adhesion performance to the adhesive composition of the present invention.

In the present invention, particularly the polyether block amide copolymer (general formula (11)) can be suitably used as the polyamide rubber elastomer, from the viewpoint of readily obtaining an aqueous dispersion of the polyamide rubber elastomer having excellent hydrolysis resistance and heat resistance, and exhibiting an excellent particle size distribution without the use of an organic solvent.

The polyamide rubber elastomer powder may be a known substance, or may be a product produced using a known method. It may also be a commercial product.

Examples of methods for producing the polyamide rubber elastomer constituting the polyamide rubber elastomer powder include a method in which a dicarboxylic acid is reacted with at least one selected from the group consisting of lactam compounds, aminocarboxylic acid compounds, and salts of diamine compounds and dicarboxylic acid compounds to prepare a polyamide block substantially having carboxyl groups at both ends, and then at least one selected from the group consisting of glycol compounds and diamine compounds is added to the polyamide block, and reacted by heating.

The dicarboxylic acid used in this method may, for example, be the same as the dicarboxylic acid compound exemplified in the description of "a salt of a diamine compound and a dicarboxylic acid compound" above.

When the polyamide rubber elastomer is a commercial product, examples of commercial products include a polyether block amide copolymer (trade name "UBESTA XPA") manufactured by Ube Industries, Ltd.; a polyether ester block amide copolymer (trade name "Pebax") manufactured by Arkema Inc.; a polyether block amide copolymer (trade name "DAIAMID") manufactured by Daicel-Evonik Ltd.; a polyether block amide copolymer (trade name "Grilamid") manufactured by EMS-CHEMIE Japan, Ltd.; a polyether block amide copolymer (trade name "Hyper-Alloy Actymer") manufactured by Riken Technos Corporation; and a polyether block amide copolymer (trade name "Novamid") manufactured by Mitsubishi Engineering-Plastics Corporation.

The average particle diameter of the polyamide rubber elastomer powder is preferably 1 to 50 µm, more preferably 1 to 40 µm, even more preferably 3 to 30 µm, and particularly preferably 5 to 15 µm. When the average particle diameter is 50 µm or less, a cured product of the adhesive composition can have suitable adhesion. When the average particle diameter is 1 µm or more, the adhesive composition can have an appropriate viscosity, and the polyamide rubber elastomer powder can be suitably dispersed in the adhesive composition of the present invention.

The average particle diameter of the polyamide rubber elastomer powder represents the volume average particle diameter as determined using the electrical sensing zone method (pore electrical resistance method).

Specific examples of apparatuses for measuring the volume average particle diameter using the pore electrical resistance method include an electrical sensing-type particle size distribution measurement apparatus (trade name "Coulter Multisizer" manufactured by Beckman Coulter, Inc.). There are various sizes for the aperture diameter to be used in the measurement, and each aperture diameter has an analytical range (sizes of volume average particle diameters) suitable for the measurement. The aperture diameter can be selected to cover particle diameters included in the particles to be measured. In the Examples described below, an aperture diameter of 100 µm was used based on this principle. An aperture diameter smaller than 100 µm may be selected to measure particles including particle diameters smaller than the analytical range for which the aperture diameter of 100 µm is suitable; and an aperture diameter greater than 100 µm may be selected to measure particles including particle diameters greater than the analytical range for which the aperture diameter of 100 µm is suitable.

While the melting point of the polyamide rubber elastomer powder is not limited, the lower limit of the melting point is preferably 100°C or higher, more preferably 110°C or higher, even more preferably 120°C or higher, and particularly preferably 130°C or higher. The upper limit of the melting point is preferably lower than 180°C, more preferably lower than 170°C, even more preferably lower than 160°C, and particularly preferably lower than 150°C.

The melting point of the polyamide rubber elastomer powder represents the value as determined using a differential scanning calorimeter (DSC).

While the flexural modulus of the polyamide rubber elastomer constituting the polyamide rubber elastomer powder is not limited, the flexural modulus as measured using the method in accordance with JIS K7171 is preferably 900 MPa or less (for example, about 10 to 850 MPa), more preferably 600 MPa or less (for example, about 25 to 550 MPa), and particularly preferably 450 MPa or less (for example, about 55 to 400 MPa).

The polyamide rubber elastomer powder preferably has a 10% displacement compressive strength of 0.1 to 4.5 MPa, and more preferably has a 10% displacement compressive strength of 0.5 to 3 MPa.

As used herein, the 10% displacement compressive strength refers to the value calculated as follows: when a compression test is performed on the resin particles using the micro-compression tester MCT-W500 manufactured by Shimadzu Corporation, the value is calculated from the particle diameter and the load at the time of a 10% deformation relative to the particle diameter, based on the equation [compressive strength (MPa) = 2.8 × load (N) at the time of a 10% deformation/{π × particle diameter (mm) × particle diameter (mm)}].

The average degree of circularity of the polyamide rubber elastomer powder is preferably 0.7 to 1, and more preferably 0.8 to 1.

Regarding the shape of the polyamide rubber elastomer powder, the average degree of circularity is measured using an image analysis-type particle size distribution measurement apparatus (for example, Microtrac PartAn SI manufactured by MicrotracBEL Corporation). The average degree of circularity represents the value obtained by summing all the values of the degree of circularity of projected images detected in a measurable range of particle diameters, and dividing the sum value by the number of the detected projected images. As used herein, the projected images refers to the images of particles detected (projected) as images by the apparatus. The degree of circularity refers to a representative index (equivalent circle diameter/perimeter diameter) that indicates how close to a circle the projected image is. The equivalent circle diameter refers to the diameter of a circle having the same area as that of the particle projected image. The perimeter diameter refers to the diameter of a circle having the same perimeter as that of the projected image.

A specific method for producing the polyamide rubber elastomer powder may be, for example, the following method.

Initially, the polyamide rubber elastomer, an ethylene oxide/propylene oxide copolymer, and an aqueous medium are placed in a container to prepare a mixture of these components.

In this case, in order to obtain the polyamide rubber elastomer powder having a highly uniform particle size distribution with high productivity, it is preferred to optionally use a surfactant other than the ethylene oxide/propylene oxide copolymer, in addition to the ethylene oxide/propylene oxide copolymer.

The surfactant other than the ethylene oxide/propylene oxide copolymer may be a nonionic surfactant.

Examples of nonionic surfactants include polyethylene glycol, polyvinyl alcohol, polyoxyethylene alkyl ethers, polyoxyethylene alkyl phenyl ethers, polyoxyethylene alkyl thioethers, acetylene glycol, polyoxyethylene fatty acid esters, polyoxyethylene sorbitan fatty acid esters, polyoxyethylene alkyl amides, alkyl fatty acid diethanolamides, and glycerin fatty acid esters.

In the present invention, a nonionic surfactant is suitably used from the viewpoint of readily obtaining the polyamide rubber elastomer powder having a highly uniform particle size distribution; in particular, a nonionic surfactant having an ether bond is suitably used.

Among the above-mentioned surfactants, those that correspond to nonionic surfactants having an ether bond are polyethylene glycol, polyoxyethylene alkyl ethers, polyoxyethylene alkyl phenyl ethers, polyoxyethylene alkyl thioethers, polyoxyethylene fatty acid esters, polyoxyethylene sorbitan fatty acid esters, sorbitan fatty acid esters, and polyoxyethylene alkyl amides. Among the above, polyethylene glycol, polyoxyethylene fatty acid esters, and sorbitan fatty acid esters are particularly preferred.

The "alkyl" in the polyoxyethylene alkyl ethers, polyoxyethylene alkyl phenyl ethers, polyoxyethylene alkyl thioethers, or polyoxyethylene alkyl amides is preferably a C₁₀₋₁₈ alkyl; more specifically, preferred examples include capryl, lauryl, myristyl, palmityl, and stearyl. The "fatty acid" in the polyoxyethylene fatty acid esters, polyoxyethylene sorbitan fatty acid esters, or sorbitan fatty acid esters is preferably a C₁₀₋₁₈ fatty acid; more specifically, preferred examples include capric acid, lauric acid, myristic acid, palmitic acid, stearic acid, oleic acid, and linoleic acid. Among the sorbitan fatty acid esters, sorbitan monolaurate is particularly preferred.

As the surfactant other than the ethylene oxide/propylene oxide copolymer, a single surfactant may be used, or two or more surfactants may be used in combination. When two or more surfactants are used in combination, it is preferred to use two or more of the nonionic surfactants in combination, and it is more preferred to use two or more of the nonionic surfactants having an ether bond in combination.

The amount of the surfactant including the ethylene oxide/propylene oxide copolymer (specifically, when the surfactant other than the ethylene oxide/propylene oxide copolymer is not used, the surfactant means the ethylene oxide/propylene oxide copolymer, and when the surfactant other than the ethylene oxide/propylene oxide copolymer is used, the surfactant means the surfactant and the ethylene oxide/propylene oxide copolymer; the same applies below) to be used is preferably less than 20 parts by mass, and more preferably 1 to 12 parts by mass, per 100 parts by mass of the polyamide rubber elastomer. When the amount of the surfactant including the ethylene oxide/propylene oxide copolymer to be used is less than 20 parts by mass, the surfactant including the ethylene oxide/propylene oxide copolymer is readily removed in the step of removing the aqueous medium described below. In the method for producing the polyamide rubber elastomer powder, it is desirable that the surfactant including the ethylene oxide/propylene oxide copolymer be dissolved in the aqueous medium and removed as much as possible, in the step of removing the aqueous medium, although the method is not limited thereto. For example, if the surfactant remains, this may limit the applications of use of the adhesive composition. Moreover, if the surfactant has not been removed from the spherical powder, in some cases where the polyamide rubber elastomer powder absorbs moisture, depending on the storage condition, the surfactant on the powder surface may be eluted due to the moisture, which makes the surface sticky and uncomfortable to the touch, and also reduces the flowability of the powder, which makes the powder difficult to handle.

In the production of the polyamide rubber elastomer powder, an antioxidant may be optionally used. The use of an antioxidant can prevent thermal degradation or discoloration of the resulting polyamide rubber elastomer powder to improve the durability. The antioxidant to be used may be blended into the above-mentioned mixture.

While the antioxidant is not limited in type, it may be a hindered phenol-based antioxidant, a sulfur-based antioxidant, a phosphorus-based antioxidant, an amine-based antioxidant, or the like.

The hindered phenol-based antioxidant may be a known hindered phenol-based antioxidant, and specific examples include triethylene glycol-bis[3-(3-t-butyl-5-methyl-4-hydroxyphenyl)propionate], 1,6-hexanediol-bis-[3-(3,5-di-t-butyl-4-hydroxyphenyl)propionate], N,N'-hexamethylenebis(3,5-di-t-butyl-4-hydroxyhydrocinnamide), pentaerythrityl-tetrakis[3-(3,5-di-t-butyl-4-hydroxyphenyl)propionate], octadecyl-3-(3,5-di-t-butyl-4-hydroxyphenyl)propionate, 1,3,5-trimethyl-2,4,6-tris(3,5-di-t-butyl-4-hydroxybenzyl)benzene, 2,6-di-t-butyl-4-ethylphenol, 2,2'-methylenebis(4-methyl-6-t-butylphenol), 4,4'-thio-bis(3-methyl-6-t-butylphenol), 4,4'-butylidene-bis(3-methyl-6-t-butylphenol), 1,1,3-tris(2-methyl-4-hydroxy-5-t--butylphenyl)butane, 1,3,5-tris(4-hydroxybenzyl)benzene, and tetrakis[methylene-3-(3,5'-di-t-butyl-4'-hydroxyphenyl propionate)]methane. One, or two or more of the above may be used. Particularly preferred among the above are 1,6-hexanediol-bis-[3-(3,5-di-t-butyl-4-hydroxyphenyl)propionate], pentaerythrityl-tetrakis[3-(3,5-di-t-butyl-4-hydroxyphenyl)propionate], N,N'-hexamethylenebis(3,5-dit-butyl-4-hydroxy-hydrocinnamide), and 1,3,5-trimethyl-2,4,6-tris(3,5-di-t-butyl-4-hydroxybenzyl)benzene.

Examples of sulfur-based antioxidants include dilauryl thiodipropionate, dimyristyl thiodipropionate, distearyl thiodipropionate, and pentaerythritol-tetrakis(β-laurylthio propionate). Particularly preferred is pentaerythritol-tetrakis(β-laurylthio propionate).

Examples of phosphorus-based antioxidants include tris(2,4-di-t-butylphenyl)phosphite, bis[2,4-bis(1,1-dimethylethyl)-6-methylphenyl]ethyl ester of phosphorous acid, tetrakis(2,4-di-t-butylphenyl)[1,1-biphenyl]-4,4-diyl bisphosphonite, bis(2,4-di-t-butylphenyl)pentaerythritol-di-phosphite, bis(2,6-di-t-butyl-4-methylphenyl)pentaerythritol-di-phosphite, and bis(2,4-dicumylphenyl)pentaerythritol-di-phosphite.

Examples of amine-based antioxidants include octylated diphenylamine, 2,4-bis-(n-octylthio)-6-(4-hydroxy-3,5-di-t-butylanilino)-1,3,5-triazine, phenyl-1-naphthylamine, poly(2,2,4-trimethyl-1,2-dihydroquinoline, and N,N'-diphenyl-p-phenylenediamine.

Two or more of these antioxidants may be used in combination. The use of these antioxidants in combination can improve the heat resistance of the polyamide rubber elastomer powder.

The amount of the antioxidant to be used is preferably 0.01 to 10 parts by mass, more preferably 0.05 to 8 parts by mass, and particularly preferably 0.1 to 5 parts by mass, per 100 parts by mass of the polyamide rubber elastomer. The use of the antioxidant in an amount of less than 10 parts by mass is economically preferred, and also reduces the possibility that the antioxidant may readily bleed, and the surface of the product may become cloudy, for example, resulting in a damaged appearance. The use of the antioxidant in an amount above 0.01 part by mass is preferred to achieve good heat resistance of the polyamide rubber elastomer powder, and, by extension, the adhesive composition.

The container to be used for preparing the above-mentioned mixture is preferably a pressure-resistant container equipped with a heating means for heating the mixture to a temperature equal to or higher than the temperature at which the polyamide rubber elastomer softens in the aqueous medium, and a stirring means capable of applying a shear force to the contents. For example, the container is preferably a pressure-resistant autoclave equipped with a stirrer.

Subsequently, the above-mentioned mixture is heated to a temperature equal to or higher than the softening temperature of the polyamide rubber elastomer, and stirred. The resulting emulsion is then cooled to room temperature, thereby obtaining an aqueous dispersion of the polyamide rubber elastomer.

The polyamide rubber elastomer powder can be produced by removing the aqueous medium from the aqueous dispersion of the polyamide rubber elastomer.

Examples of methods for removing the aqueous medium from the aqueous dispersion of the polyamide rubber elastomer include, but are not limited to, a method in which the aqueous medium is evaporated from the aqueous dispersion of the polyamide rubber elastomer to obtain the polyamide rubber elastomer powder; a method in which the aqueous dispersion of the polyamide rubber elastomer is filtered through a filtering material (preferably a filtering material having porous properties, for example) to filter off the aqueous medium from the aqueous dispersion; and a method in which the aqueous dispersion is centrifuged or decanted to precipitate the polyamide rubber elastomer, and then the aqueous medium is removed.

The method for filtering off the aqueous medium from the aqueous dispersion of the polyamide rubber elastomer is not limited.

While the filtration may be performed using any method such as normal-pressure filtration, reduced-pressure filtration, pressure filtration, or hot filtration, filtration by reduced-pressure filtration or by pressure filtration can be suitably used, because the aqueous dispersion of the polyamide rubber elastomer readily gives a good wet cake, and the method of filtering off the aqueous medium has high productivity.

The method for drying the wet cake is not limited, and may be a known drying method. For example, the wet cake may be dried with a dryer. The apparatus for drying the wet cake is not limited, and may be a conventional apparatus such as a hot-air dryer or a reduced-pressure dryer. The drying temperature and the pressure conditions for drying the wet cake, such as under normal pressure or reduced pressure, are not limited; however, the drying temperature is preferably about 50 to 150°C, and more preferably about 70 to 100°C. A drying temperature of 50°C or higher is preferred in terms of production efficiency in that the aqueous medium can be removed by drying in a shorter period of time. A drying temperature of 150°C or lower is preferred in that the wet cake can be dried while further inhibiting thermal degradation of the polyamide rubber elastomer powder.

The polyamide rubber elastomer powder has hygroscopicity and thus, when left in the air, it has the property of showing a gradual increase in the moisture content. Preferably, therefore, the polyamide rubber elastomer powder after drying is rapidly transferred into a hermetically sealed container, such as a desiccator, to block the air.

The polyamide rubber elastomer powder obtained by the above-described method has a substantially spherical shape.

To further improve the powder properties, the polyamide rubber elastomer powder may be a polyamide rubber elastomer powder having improved flowability, which is obtained by adding an inorganic micropowder of silica, alumina, or the like as a lubricant.

### <Copolymer Nylon Powder>

The copolymer nylon powder is composed of the powder of a copolymer nylon.

The copolymer nylon constituting the copolymer nylon powder is not limited as long as it is a copolymer nylon, and may be a known one, or one that is produced by a known method. The copolymer nylon may also be a commercial copolymer nylon. The copolymer nylon powder may be composed of a single copolymer nylon or two or more copolymer nylons.

Examples of copolymer nylons include copolymer nylons produced by methods such as polycondensation of a diamine and a dicarboxylic acid, polycondensation of an co-amino-co'-carboxylic acid, and ring-opening polymerization of a lactam. Specifically, examples of copolymer nylons include a copolymer nylon in which a diamine and a dicarboxylic acid have been polycondensed, a copolymer nylon in which an co-amino-co'-carboxylic acid has been polycondensed, and a copolymer nylon in which a lactam has been ring-opened. In the polycondensation or ring-opening polymerization, a dicarboxylic acid or a monocarboxylic acid may be used as a polymerization regulator.

The copolymer nylon in which a diamine and a dicarboxylic acid have been polycondensed is, in other words, a copolymer nylon containing a diamine and a dicarboxylic acid as monomer structural units; the copolymer nylon in which an aminocarboxylic acid has been polycondensed is, in other words, a copolymer nylon containing an aminocarboxylic acid as a monomer structural unit; and the copolymer nylon in which a lactam has been ring-opened is, in other words, a copolymer nylon containing a lactam as a monomer structural unit.

Examples of diamines include ethylenediamine, trimethylenediamine, tetramethylenediamine, pentamethylenediamine, hexamethylenediamine, 1,7-diaminoheptane, 1,8-diaminooctane, 1,9-diaminononane, 1,10-diaminodecane, phenylenediamine, and m-xylylenediamine.

Examples of dicarboxylic acids include glutaric acid, adipic acid, pimelic acid, suberic acid, azelaic acid, sebacic acid, nonanedicarboxylic acid, decanedicarboxylic acid, tetradecanedicarboxylic acid, octadecanedicarboxylic acid, fumaric acid, phthalic acid, xylylene dicarboxylic acid, and dimer acids (unsaturated dicarboxylic acids containing 36 carbon atoms, synthesized from unsaturated fatty acids including linoleic acid or oleic acid as a main component).

Examples of aminocarboxylic acids include 6-aminocaproic acid, 7-aminoheptanoic acid, 9-aminononanoic acid, 11-aminoundecanoic acid, and 12-aminododecanoic acid.

Examples of lactams include ε-caprolactam, ω-enantholactam, and ω-lauryllactam.

The dicarboxylic acid to be used as the polymerization regulator may be the same as the dicarboxylic acid to be used in the production of the copolymer nylon, and examples include glutaric acid, adipic acid, pimelic acid, suberic acid, azelaic acid, sebacic acid, nonanedicarboxylic acid, decanedicarboxylic acid, tetradecanedicarboxylic acid, octadecanedicarboxylic acid, fumaric acid, phthalic acid, xylylene dicarboxylic acid, and dimer acids. Examples of the monocarboxylic acid include caproic acid, heptanoic acid, nonanoic acid, undecanoic acid, and dodecanoic acid.

Specific examples of copolymer nylons include nylon 6/66 copolymer, nylon 6/610 copolymer, nylon 6/11 copolymer, nylon 6/12 copolymer, nylon 6/66/11 copolymer, nylon 6/66/12 copolymer, nylon 6/66/11/12 copolymer, and nylon 6/66/610/11/12 copolymer. Preferred among the above are nylon 6/66/11/12 copolymer, nylon 6/66/12 copolymer, and nylon 6/12 copolymer. As used herein, the slash "/" is used to indicate that the copolymer is a copolymer of each of the nylons. For example, nylon 6/66 copolymer refers to a copolymer nylon of nylon 6 and nylon 66.

When the copolymer nylon is a commercial product, examples of commercial products include a copolyamide-based resin (trade name "Griltex") manufactured by EMS-CHEMIE, Ltd.; and (trade name "PLATAMID") manufactured by Arkema Inc.

While the average particle diameter of the copolymer nylon powder is not limited, it is preferably 1 to 50 µm, more preferably 3 to 40 µm, even more preferably 5 to 30 µm, and particularly preferably 10 to 30 µm. When the average particle diameter is 50 µm or less, the cured product of the adhesive composition can have suitable adhesion. When the average particle diameter is 1 µm or more, the adhesive composition can have an appropriate viscosity, and the copolymer nylon powder can be suitably dispersed in the adhesive composition of the present invention.

The average particle diameter of the copolymer nylon powder represents the volume average particle diameter as determined using the electrical sensing zone method (pore electrical resistance method).

Specific examples of apparatuses for measuring the volume average particle diameter using the pore electrical resistance method include an electrical sensing-type particle size distribution measurement apparatus (trade name "Coulter Multisizer" manufactured by Beckman Coulter, Inc.). As described above, there are various sizes for the aperture diameter to be used in the measurement, and each aperture diameter has an analytical range (sizes of volume average particle diameters) suitable for the measurement. The aperture diameter can be selected to cover particle diameters included in the particles to be measured. In the Examples described below, an aperture diameter of 100 µm was used based on this principle.

While the melting point of the copolymer nylon powder is not limited, the lower limit of the melting point is preferably 60°C or higher, and particularly preferably 70°C or higher. The upper limit of the melting point is preferably lower than 170°C, more preferably lower than 150°C, and particularly preferably lower than 145°C.

The melting point of the copolymer nylon powder represents the value as determined using a differential scanning calorimeter (DSC).

The copolymer nylon powder has a substantially spherical shape.

The average degree of circularity of the copolymer nylon powder is preferably 0.6 to 1, more preferably 0.7 to 1, and even more preferably 0.8 to 1.

Regarding the shape of the copolymer nylon powder, the average degree of circularity is measured using an image analysis-type particle size distribution measurement apparatus (for example, Microtrac PartAn SI manufactured by MicrotracBEL Corporation), as with the polyamide rubber elastomer powder.

To further improve the powder properties, the copolymer nylon powder may be a copolymer nylon powder having improved flowability, which is obtained by adding an inorganic micropowder of silica, alumina, or the like as a lubricant.

The copolymer nylon powder may be a commercial powder, or may be particles emulsified with a surfactant.

### (Polyolefin Resin Powder)

The polyolefin resin powder is composed of the powder of a polyolefin resin.

Examples of polyolefin resins constituting the polyolefin resin powder include low-density polyethylene, high-density polyethylene, polypropylene, and polyolefins obtained by copolymerization of olefins with other monomers.

Low-density polyethylene is preferably polyethylene with a density of 0.910 or more and less than 0.930, as defined in the former JIS K6748: 1995.

High-density polyethylene is preferably polyethylene with a density of 0.942 or more, as defined in the former JIS K6748: 1995.

Examples of other monomers to be copolymerized with olefins include, but are not limited to, (meth)acrylic acid-based carboxyl group-containing monomers ["(meth)acrylic acid" refers to "acrylic acid" or "methacrylic acid"; the same applies below], ethylenically unsaturated monomers such as vinyl group-containing monomers, epoxy group-containing monomers, amino group-containing monomers, acid-modifying group-containing monomers, and monomers containing metal salts thereof.

Examples of ethylenically unsaturated monomers include acrylonitrile, vinyl acetate, acrylic acid, methacrylic acid, methyl (meth)acrylate, ethyl (meth)acrylate, propyl (meth)acrylate, butyl (meth)acrylate, and 2-ethylhexyl (meth)acrylate. As used herein, "(meth)acryl" refers to "acryl" or "methacryl". The same applies below.

Examples of epoxy group-containing monomers include glycidyl (meth)acrylate.

Examples of amino group-containing monomers include dimethylaminoethyl (meth)acrylate, (meth)acrylamide, N,N-butoxymethyl (meth)acrylamide, and N-methylacrylamide.

Examples of acid-modifying group-containing monomers include maleic anhydrides and maleic acid esters.

Examples of these polyolefin resins include a partially saponified ethylene-vinyl acetate copolymer, which is a saponification product of ethylene-vinyl acetate copolymer, and an ethylene-vinyl alcohol copolymer.

Among these polyolefin resins, low-density polyethylene, high-density polyethylene, a copolymer of ethylene with an epoxy group-containing monomer, a copolymer of ethylene with an acid-modifying group-containing monomer, and a copolymer of ethylene with an ethylenically unsaturated monomer are preferably used; and a copolymer of ethylene with an epoxy group-containing monomer, a copolymer of ethylene with an acid-modifying group-containing monomer, and a copolymer of ethylene with an ethylenically unsaturated monomer are particularly preferably used. More specifically, for example, an ethylene-glycidyl methacrylate copolymer, an ethylene-maleic anhydride copolymer, an ethylene-acrylic acid copolymer, an ethylene-methyl methacrylate copolymer, an ethylene-acrylic acid ester-maleic anhydride ternary copolymer, and a saponified ethylene-vinyl acetate copolymer are suitably used.

The polyolefin resin powder preferably has an average particle diameter of 1 to 25 µm. The average particle diameter is preferably 5 to 20 µm, and more preferably 8 to 18 µm.

The average particle diameter of the polyolefin resin powder represents the volume average particle diameter as determined using the electrical sensing zone method (pore electrical resistance method). The average particle diameter may be determined using, for example, the above-mentioned electrical sensing-type particle size distribution measurement apparatus (Coulter Multisizer manufactured by Beckman Coulter, Inc.). As described above, there are various sizes for the aperture diameter to be used in the measurement, and each aperture diameter has an analytical range (sizes of volume average particle diameters) suitable for the measurement. The aperture diameter can be selected to cover particle diameters included in the particles to be measured. In the Examples described below, an aperture diameter of 100 µm was used based on this principle.

Examples of methods for producing the polyolefin resin powder include a method in which the polyolefin resin is mechanically ground with a high-shear pulverizer; a method in which the polyolefin resin is dissolved in a good solvent, a nonsolvent is optionally added, and particles are obtained by precipitating the particles by cooling, or evaporating the solvent; and a method in which the resin is mixed with a dispersion agent and water to obtain particles of the dispersed resin. Preferred among these methods is the method in which the resin is mixed with a dispersion agent and water to obtain particles of the dispersed resin, which can produce spherical particles particularly well. In this method, the dispersion agent may be a surfactant, which is preferably, for example, an ethylene oxide-propylene oxide copolymer.

It is preferred that the surface of the polyolefin resin powder to be used in the present invention be coated with silica, and it is more preferred that the silica surface be formed of hydrophobized particles. This is because when the polyolefin resin powder surface is coated with silica, it is expected that the polyolefin resin powder will not only have improved compatibility with the curable resin (A) such as an epoxy resin, and be readily dispersed more uniformly, but will also have improved adhesion of the particles to the curable resin (A). The silica to be used preferably has a particle shape (i.e., silica particles). The silica is preferably added in an amount of 0.1 to 1.0 part by mass per 100 parts by mass of the polyolefin resin powder. When the amount of the silica added is 1.0 part mass or less, the adhesive composition is less likely to be cloudy, and spots are less likely to occur on the surface of the composition during curing. When the amount of the silica added is 0.1 part by mass or more, the dispersibility in the solvent can be further improved (i.e., the polyolefin resin powder can be readily dispersed more uniformly).

The particle surface of the polyolefin resin powder may be coated with silica entirely or partially.

While the method for coating the polyolefin resin powder with silica is not limited, a polyolefin resin powder surface-treated with silica, i.e., to which silica is adhered or anchored, can be obtained by adding an appropriate amount of silica, and mixing and stirring it with the polyolefin resin powder in a general mixer.

### (Acrylic Resin Powder)

The acrylic resin powder is composed of the powder of an acrylic resin.

The acrylic resin constituting the acrylic resin powder may be a polymer containing a single monomer, or a polymer containing two or more monomers.

Examples of monomers constituting the acrylic resin include (meth)acrylic acid and (meth)acrylic acid esters.

Examples of (meth)acrylic acid esters include methyl (meth)acrylate, ethyl (meth)acrylate, butyl (meth)acrylate, phenyl (meth)acrylate, and cyclohexyl (meth)acrylate.

The polymer containing methyl (meth)acrylate is not limited, and may be a commercial polymethyl (meth)acrylate resin. Examples include polymethyl methacrylate (trade name: "PARAPET") manufactured by Kuraray Co., Ltd. Commercial resin powders may also be used, such as, for example, a polymethyl methacrylate powder (trade name "FMA403") manufactured by Fujikura Kasei Co., Ltd., and a polymethyl methacrylate powder (trade name: "MX-1000") manufactured by Soken Chemical & Engineering Co., Ltd.

### <Additives That May Be Contained in Adhesive Composition>

The adhesive composition of the present invention may optionally contain other additives, as long as they do not interfere with the object or effects of the present invention.

Examples of additives include antioxidants, inorganic fluorescent substances, lubricants, ultraviolet absorbers, heat/light stabilizers, antistatic agents, polymerization inhibitors, antifoaming agents, solvents, anti-aging agents, radical inhibitors, adhesion-improving agents, flame retardants, surfactants, storage stability-improving agents, ozone aging inhibitors, thickeners, plasticizers, radiation-blocking agents, nucleating agents, coupling agents, conductivity-imparting agents, phosphorus-based peroxide-decomposing agents, pigments, metal deactivators, and physical property-controlling agents.

### <Method for Producing Adhesive Composition>

The adhesive composition of the present invention can be produced by mixing the curable resin (A), the substantially spherical organic particles (B), and optionally a curing agent, a curing accelerator, and other additives.

The mixing method is not limited as long as it can homogeneously mix the components, and examples include mixing and stirring with a paddle blade; mixing and stirring with a homomixer; and mixing and stirring with a planetary centrifugal mixer.

Because the adhesive composition of the present invention has a low viscosity, it can be prepared without adding a solvent. Optionally, however, a solvent (such as toluene, xylene, methyl ethyl ketone, acetone, cyclohexanone, methylcyclohexane, or cyclohexane) may be added as long as it does not adversely affect the effects of the present invention.

A cured product can be obtained by curing the adhesive composition of the present invention. The curing method is not limited, and may be selected appropriately according to the type of the curing reaction of the curable resin. For example, the composition can be cured by heating. When, for example, the composition is cured by heating, the curing temperature is typically from room temperature (25°C) to 250°C. The curing time, which may vary depending on the liquid composition, may be set in a wide range that is typically from 30 minutes to 1 week.

The adhesive composition of the present invention can be suitably used for adhesive applications such as structural materials, composite materials, automobiles, electronic materials, carbon fiber composite materials, semiconductors, potting materials, substrate materials, lamination materials, coating materials, and paints. The adhesive composition of the present invention can be used for, for example, adhesive applications in various industrial fields, and specifically, can be suitably used as an adhesive to be adhered to parts formed of metal materials such as iron, stainless steel, and aluminum as adherends.

### <Cured Product of Adhesive Composition>

A cured product of the adhesive composition of the present invention is obtained by curing the adhesive composition of the present invention described above. While the method for curing the adhesive composition of the present invention is not limited, examples include a method in which the adhesive composition of the present invention is heated, as described above; a method in which the composition is irradiated with ionizing radiation such as ultraviolet radiation; and a method in which the composition is placed in a humid environment.

### <Method for Producing Uncured Adhesive Layer>

An uncured adhesive layer can be formed by applying the adhesive composition of the present invention to a surface of an adherend in an application amount of 5 mg/cm² or more and 500 mg/cm² or less.

### <Method for Producing Adhesive Layer>

An adhesive layer can be formed by applying the adhesive composition of the present invention to a surface of an adherend in an application amount of 5 mg/cm² or more and 500 mg/cm² or less, and curing the adhesive composition.

### <Method for Producing Laminate>

A laminate in which at least two adherends are adhered can be produced by applying the adhesive composition of the present invention to a surface of an adherend in an application amount of 5 mg/cm² or more and 500 mg/cm² or less, and placing the adhesive composition between the at least two adherends; and subsequently curing the adhesive composition.

### Examples

The present invention will be hereinafter described in detail with examples and comparative examples, although the present invention is not limited to the examples.

### <Evaluation of Adhesion Strength and Failure Mode>

### (1) Tensile Shear Adhesion Strength on Aluminum Sheet

An adhesive composition was applied to an aluminum sheet (JIS A1050P) (size: 2 × 25 × 100 mm) such that the adhesive portion became a 12.5 × 25 mm rectangle, and this aluminum sheet was bonded to another aluminum sheet. The adhesive composition was cured in this state to prepare a tensile shear adhesion test sample. The curing conditions were as follows: 1 hour at 100°C and 2 hours at 150°C when the curable resin contained in the adhesive composition was an epoxy resin; 1 hour at 150°C when the curable resin was a silicone resin; or 2 hours at 65°C and 2 hours at 100°C when the curable resin was an acrylic resin. The obtained test sample was subjected to a tensile shear adhesion test, using a tensile testing machine (AGS-X manufactured by Shimadzu Corporation) at a grip distance of 100 mm and a test speed of 5 mm/min. Based on the adhesive area and the measurement value of the maximum strength at break, the tensile shear adhesion strength on the aluminum sheet was calculated. Additionally, the broken test sample was observed to examine the failure mode. The results are shown in Table 1. It should be noted that the aluminum sheet surface was cleaned with acetone and dried to prepare the tensile shear adhesion test sample.

### (2) Tensile Shear Adhesion Strength on SPCC Steel Sheet

A tensile shear adhesion test sample was prepared as in (1) Tensile Shear Adhesion Strength on Aluminum Sheet above, except that an SPCC steel sheet (JIS SPCC, SB) was used instead of the aluminum sheet. For the obtained test sample, the tensile shear adhesion strength on the SPCC steel sheet was calculated as in (1) Tensile Shear Adhesion Strength on Aluminum Sheet above. Additionally, the broken test sample was observed to examine the failure mode. The results are shown in Table 1. It should be noted that the SPCC steel sheet surface was cleaned with acetone and dried to prepare the tensile shear adhesion test sample.

### <Production of Substantially Spherical Organic Particles (B)>

### [Production Example 1: Polyamide Rubber Elastomer Powder A]

A 1-liter internal volume pressure-resistant autoclave with a 50-mm diameter turbine-type stirring blade was charged with 160 g of a poly ether block amide copolymer (melting point: 135°C, flexural modulus: 89) as a polyamide rubber elastomer, 224 g of deionized water, and 16 g of an ethylene oxide/propylene oxide copolymer (weight average molecular weight: 15,500, ethylene oxide content: 80% by weight), and hermetically sealed. Subsequently, the internal temperature of the autoclave was increased to 180°C with stirring. Stirring was further continued while maintaining the internal temperature at 180°C, and then the contents were cooled to room temperature to obtain an aqueous dispersion of the polyamide rubber elastomer. Subsequently, the aqueous medium was filtered off from the aqueous dispersion. Subsequently, the wet cake was put in a reduced-pressure dryer and dried under reduced pressure, and then removed to obtain a polyamide rubber elastomer powder A. The polyamide rubber elastomer powder thus obtained exhibited a volume average particle diameter of 10.5 µm, as measured by the electrical sensing zone method using the aperture 100. A portion of the polyamide rubber elastomer powder was sampled and observed with a scanning electron microscope (JSM-6390LA manufactured by JEOL), which confirmed that the polyamide rubber elastomer powder was spherical in shape. Moreover, the average degree of circularity of the polyamide rubber elastomer powder was measured using an image analysis-type particle size distribution measurement apparatus (Microtrac PartAn SI manufactured by MicrotracBEL Corporation). As a result, the average degree of circularity of the polyamide rubber elastomer powder was measured as 0.9.

### [Production Example 2: Copolymer Nylon Powder B]

A copolymer nylon powder B was obtained as in Production Example 1, except that the polyether block amide copolymer was replaced by a copolymer nylon powder. The copolymer nylon powder B thus obtained exhibited a volume average particle diameter of 14.5 µm, as measured by the electrical sensing zone method using the aperture 100. A portion of the copolymer nylon powder B was sampled and observed with a scanning electron microscope (JSM-6390LA manufactured by JEOL), which confirmed that the copolymer nylon powder B was spherical in shape. Moreover, the average degree of circularity of the copolymer nylon powder B was measured using an image analysis-type particle size distribution measurement apparatus (Microtrac PartAn SI manufactured by MicrotracBEL Corporation). As a result, the average degree of circularity of the copolymer nylon powder B was measured as 0.86.

### [Production Example 3: Polyolefin Resin Powder C]

A polyolefin resin powder C was obtained as in Production Example 1, except that the polyether block amide copolymer was replaced by an ethylene-glycidyl methacrylate copolymer resin. The polyolefin resin powder C thus obtained exhibited a volume average particle diameter of 17 µm, as measured by the electrical sensing zone method using the aperture 100. A portion of the polyolefin resin powder C was sampled and observed with a scanning electron microscope (JSM-6390LA manufactured by JEOL), which confirmed that the polyolefin resin powder C was spherical in shape. Moreover, the average degree of circularity of the polyolefin resin powder C was measured using an image analysis-type particle size distribution measurement apparatus (Microtrac PartAn SI manufactured by MicrotracBEL Corporation). As a result, the average degree of circularity of polyolefin resin powder C was measured as 0.89.

### [Production Example 4: Polyolefin Resin Powder D]

A polyolefin resin powder D was obtained as in Production Example 1, except that the polyether block amide copolymer was replaced by a low-density polyethylene resin (LDPE). The polyolefin resin powder D thus obtained exhibited a volume average particle diameter of 10 µm, as measured by the electrical sensing zone method using the aperture 100. A portion of the polyolefin resin powder D was sampled and observed with a scanning electron microscope (JSM-6390LA manufactured by JEOL), which confirmed that the polyolefin resin powder D was spherical in shape. Moreover, the average degree of circularity of the polyolefin resin powder D was measured using an image analysis-type particle size distribution measurement apparatus (Microtrac PartAn SI manufactured by MicrotracBEL Corporation). As a result, the average degree of circularity of polyolefin resin powder D was measured as 0.96.

### [Production Example 5: Polyolefin Resin Powder E]

A polyolefin resin powder E was obtained as in Production Example 1, except that the polyether block amide copolymer was replaced by an ethylene-acrylic acid copolymer resin. The polyolefin resin powder E thus obtained exhibited a volume average particle diameter of 10 µm, as measured by the electrical sensing zone method using the aperture 100. A portion of the polyolefin resin powder E was sampled and observed with a scanning electron microscope (JSM-6390LA manufactured by JEOL), which confirmed that the polyolefin resin powder E was spherical in shape. Moreover, the average degree of circularity of the polyolefin resin powder E was measured using an image analysis-type particle size distribution measurement apparatus (Microtrac PartAn SI manufactured by MicrotracBEL Corporation). As a result, the average degree of circularity of polyolefin resin powder E was measured as 0.94.

### [Production Example 6: Polyolefin Resin Powder F]

A polyolefin resin powder F was obtained as in Production Example 1, except that the polyether block amide copolymer was replaced by an ethylene-propylene copolymer resin. The polyolefin resin powder F thus obtained exhibited a volume average particle diameter of 11 µm, as measured by the electrical sensing zone method using the aperture 100. A portion of the polyolefin resin powder F was sampled and observed with a scanning electron microscope (JSM-6390LA manufactured by JEOL), which confirmed that the polyolefin resin powder F was spherical in shape. Moreover, the average degree of circularity of the polyolefin resin powder F was measured using an image analysis-type particle size distribution measurement apparatus (Microtrac PartAn SI manufactured by MicrotracBEL Corporation). As a result, the average degree of circularity of polyolefin resin powder F was measured as 0.91.

### [Production Example 7: Polyolefin Resin Powder G]

A polyolefin resin powder G was obtained as in Production Example 1, except that the polyether block amide copolymer was replaced by an ethylene-methyl methacrylate copolymer resin. The polyolefin resin powder G thus obtained exhibited a volume average particle diameter of 13 µm, as measured by the electrical sensing zone method using the aperture 100. A portion of the polyolefin resin powder G was sampled and observed with a scanning electron microscope (JSM-6390LA manufactured by JEOL), which confirmed that the polyolefin resin powder G was spherical in shape. Moreover, the average degree of circularity of the polyolefin resin powder G was measured using an image analysis-type particle size distribution measurement apparatus (Microtrac PartAn SI manufactured by MicrotracBEL Corporation). As a result, the average degree of circularity of polyolefin resin powder E was measured as 0.91.

### [Example 1]

3 parts by mass of an imidazole-based curing accelerator (CUREZOL 2E4MZ manufactured by Shikoku Chemicals Corporation) was added to 100 parts by mass of a bisphenol A-type epoxy resin (EPIKLON 1050 manufactured by DIC Corporation; epoxy equivalents: 476). Then, 30 parts by mass of the polyamide rubber elastomer powder A obtained in Production Example 1 was added. The components were stirred and mixed to prepare an adhesive composition. A cured product obtained under the above-described curing conditions, using the adhesive composition, was evaluated according to the evaluation methods. The results are shown in Table 1.

### [Example 2]

A cured product of an adhesive composition was prepared as in Example 1, except that 30 parts by mass of the copolymer nylon powder B obtained in Production Example 2 was added. The cured product was evaluated according to the evaluation methods. The results are shown in Table 1.

### [Example 3]

A cured product of an adhesive composition was prepared as in Example 1, except that 10 parts by mass of the polyolefin resin powder C obtained in Production Example 3 was added. The cured product was evaluated according to the evaluation methods. The results are shown in Table 1.

### [Example 4]

A cured product of an adhesive composition was prepared as in Example 1, except that 10 parts by mass of the polyolefin resin powder D obtained in Production Example 4 was added. The cured product was evaluated according to the evaluation methods. The results are shown in Table 1.

### [Example 5]

A cured product of an adhesive composition was prepared as in Example 1, except that 30 parts by mass of the polyolefin resin powder E obtained in Production Example 5 was added. The cured product was evaluated according to the evaluation methods. The results are shown in Table 1.

### [Example 6]

A cured product of an adhesive composition was prepared as in Example 1, except that the application amount of the adhesive composition prepared in Example 5 was 118 mg/cm². The cured product was evaluated according to the evaluation methods. The results are shown in Table 1.

### [Example 7]

A cured product of an adhesive composition was prepared as in Example 1, except that the application amount of the adhesive composition prepared in Example 5 was 236 mg/cm². The cured product was evaluated according to the evaluation methods. The results are shown in Table 1.

### [Example 8]

A cured product of an adhesive composition was prepared as in Example 1, except that the application amount of the adhesive composition prepared in Example 5 was 472 mg/cm². The cured product was evaluated according to the evaluation methods. The results are shown in Table 1.

### [Example 9]

A cured product of an adhesive composition was prepared as in Example 1, except that 80 parts by mass of the polyolefin resin powder E obtained in Production Example 5 was added. The cured product was evaluated according to the evaluation methods. The results are shown in Table 1.

### [Example 10]

A cured product of an adhesive composition was prepared as in Example 1, except that 30 parts by mass of the polyolefin resin powder F obtained in Production Example 6 was added. The cured product was evaluated according to the evaluation methods. The results are shown in Table 1.

### [Example 11]

30 parts by mass of the polyolefin resin powder D obtained in Production Example 4 was added to 100 parts by mass of a two-component addition-curing silicone resin (OE-6630 manufactured by Dow Corning Toray Co., Ltd.), and the mixture was stirred and mixed to prepare an adhesive composition. A cured product prepared under the above-described curing conditions, using the adhesive composition, was evaluated according to the evaluation methods. The results are shown in Table 1.

### [Example 12]

A cured product of an adhesive composition was prepared as in Example 6, except that 30 parts by mass of the polyamide rubber elastomer powder A obtained in Production Example 1 was added. The cured product was evaluated according to the evaluation methods. The results are shown in Table 1.

### [Example 13]

0.5 part by mass of a radical initiator (PEROCTA O manufactured by NOF Corporation) was added to 100 parts by mass of an acrylic resin (HITALOID 7975 manufactured by Hitachi Chemical Co., Ltd.). Then, 30 parts by mass of the polyolefin resin powder D obtained in Production Example 4 was added. The mixture was stirred at 25°C for 30 minutes, and vacuum degassed at 25°C for 10 minutes to prepare an adhesive composition. A cured product prepared under the above-described curing conditions, using the adhesive composition, was evaluated according to the evaluation methods. The results are shown in Table 1.

### [Example 14]

A cured product of an adhesive composition was prepared as in Example 1, except that 30 parts by mass of the polyolefin resin powder G obtained in Production Example 7 was added. The cured product was evaluated according to the evaluation methods. The results are shown in Table 1.

### [Example 15]

A cured product of an adhesive composition was prepared as in Example 1, except that 30 parts by mass of a commercial acrylic resin powder H (polymethyl methacrylate powder; "MX-1000" manufactured by Soken Chemical & Engineering Co., Ltd.) was added. The cured product was evaluated according to the evaluation methods. The results are shown in Table 1.

### [Comparative Example 1]

A cured product of an adhesive composition was prepared as in Example 1, except that the polyamide rubber elastomer powder A was not added. The cured product was evaluated according to the evaluation methods. The results are shown in Table 1.

### [Comparative Example 2]

A cured product of an adhesive composition was prepared as in Example 5, except that the application amount of the adhesive composition prepared in Example 5 was 945 mg/cm². The cured product was evaluated according to the evaluation methods. The results are shown in Table 1.

### [Comparative Example 3]

A cured product of an adhesive composition was prepared as in Example 1, except that 10 parts by mass of commercial calcium carbonate (amorphous inorganic particles) was added instead of the polyamide rubber elastomer powder A. The cured product was evaluated according to the evaluation methods. The results are shown in Table 1.

### [Comparative Example 4]

A cured product of an adhesive composition was prepared as in Example 1, except that 30 parts by mass of commercial talc (flake inorganic particles) was added instead of the polyamide rubber elastomer powder A. The cured product was evaluated according to the evaluation methods. The results are shown in Table 1.

### [Comparative Example 5]

A cured product of an adhesive composition was prepared as in Example 1, except that 30 parts by mass of commercial silica (amorphous inorganic particles) was added instead of the polyamide rubber elastomer powder A. The cured product was evaluated according to the evaluation methods. The results are shown in Table 1.

### [Comparative Example 6]

A cured product of an adhesive composition was prepared as in Comparative Example 5, except that the application amount of the adhesive composition prepared in Comparative Example 5 was 289 mg/cm². The cured product was evaluated according to the evaluation methods. The results are shown in Table 1.

### [Comparative Example 7]

A silicone resin cured product was prepared as in Example 11, except that 30 parts by mass of commercial calcium carbonate (amorphous inorganic particles) was added instead of the polyolefin resin powder D. The cured product was evaluated according to the evaluation methods. The results are shown in Table 1.

### [Comparative Example 8]

An acrylic resin cured product was prepared as in Example 13, except that the polyolefin resin powder D was not added. The cured product was evaluated according to the evaluation methods. The results are shown in Table 1.

**[Table 1]**

| | Curable resin | Substantially spherical particles | | Application amount mg/cm² | Adhesion strength (MPa) | | Failure mode |
|---|---|---|---|---|---|---|---|
| | | Type | Amount (parts by mass) added per 100 parts by mass of curable resin | | Adherend | | |
| | | | | | SPCC | AI | |
| Ex. 1 | Epoxy resin | Polyamide rubber elastomer powderA | 30 | 36 | 16.1 | 13.6 | Cohesive failure |
| Ex. 2 | Epoxy resin | Nylon powderB | 30 | 37 | 16.0 | 11.2 | Cohesive failure |
| Ex. 3 | Epoxy resin | Polyolefin resin powderC | 10 | 35 | 14.6 | 6.8 | Cohesive failure |
| Ex. 4 | Epoxy resin | Polyolefin resin powderD | 10 | 37 | 13.5 | 10.2 | Cohesive failure |
| Ex. 5 | Epoxy resin | Polyolefin resin powderE | 30 | 35 | 15.3 | 8.0 | Cohesive failure |
| Ex. 6 | Epoxy resin | Polyolefin resin powderE | 30 | 118 | 15.6 | 7.8 | Cohesive failure |
| Ex. 7 | Epoxy resin | Polyolefin resin powderE | 30 | 236 | 13.6 | 6.4 | Cohesive failure |
| Ex. 8 | Epoxy resin | Polyolefin resin powderE | 30 | 472 | 11.1 | 4.6 | Cohesive failure |
| Ex. 9 | Epoxy resin | Polyolefin resin powderE | 80 | 34 | 15.5 | 6.0 | Cohesive failure |
| Ex. 10 | Epoxy resin | Polyolefin resin powderF | 30 | 35 | 14.6 | 6.8 | Cohesive failure |
| Ex. 11 | Silicone resin | Polyolefin resin powderD | 30 | 35 | 4.5 | 4.1 | Cohesive failure |
| Ex. 12 | Epoxy resin | Polyamide rubber elastomer powder A | 30 | 119 | 12.2 | 3.8 | Cohesive failure |
| Ex. 1 3 | Acrylic resin | Polyolefin resin powderD | 30 | 34 | 17.6 | 17.2 | Cohesive failure |
| Ex. 1 4 | Epoxy resin | Polyolefin resin powderG | 30 | 37 | 17.6 | 11.0 | Cohesive failure |
| Ex. 1 5 | Epoxy resin | Acrylic resin powderH | 30 | 36 | 15.4 | 10.8 | Cohesive failure |
| Comp. Ex. 1 | Epoxy resin | - | 0 | 38 | 12.1 | 5.5 | Adhesive failure |
| Comp. Ex. 2 | Epoxy resin | Polyolefin resin powderE | 30 | 945 | 1.9 | 0.9 | Adhesive failure |
| Comp. Ex. 3 | Epoxy resin | Calcium carbonate | 10 | 48 | 12.5 | 9.2 | Combination of cohesive failure and adhesive failure |
| Comp. Ex. 4 | Epoxy resin | Talc | 30 | 41 | 13.7 | 9.7 | Adhesive failure |
| Comp. Ex. 5 | Epoxy resin | Silica | 30 | 43 | 11.4 | 4.9 | Adhesive failure |
| Comp. Ex. 6 | Epoxy resin | Silica | 30 | 289 | 4.4 | 2.1 | Adhesive failure |
| Comp. Ex. 7 | Silicone resin | Calcium carbonate | 30 | 48 | 3.6 | 2.6 | Adhesive failure |
| Comp. Ex. 8 | Acrylic resin | - | 0 | 36 | 14.6 | 14.1 | Adhesive failure |

## Claims

1. An adhesive composition comprising, per 100 parts by mass of a curable resin (A), 1 part by mass or more and 80 parts by mass or less of substantially spherical organic particles (B), wherein
the adhesive composition is used in an application amount of 5 mg/cm² or more and 500 mg/cm² or less on an adherend.

2. The adhesive composition according to claim 1, wherein the substantially spherical organic particles (B) are thermoplastic.

3. The adhesive composition according to claim 1 or 2, wherein the substantially spherical organic particles (B) have an average degree of circularity of 0.6 or more and an average particle diameter of 1 µm or more and 50 µm or less.

4. The adhesive composition according to any one of claims 1 to 3, wherein the substantially spherical organic particles (B) comprise at least one resin selected from the group consisting of polyolefin resins, polyester resins, polyether resins, polyamide resins, acrylic resins, and thermoplastic urethane resins.

5. The adhesive composition according to any one of claims 1 to 4, which is used for any of the following adhesive applications: structural materials, composite materials, automobiles, electronic materials, carbon fiber composite materials, semiconductors, potting materials, substrate materials, lamination materials, coating materials, and paints.

6. A cured product of the adhesive composition according to any one of claims 1 to 5.

7. A method for producing an uncured adhesive layer, comprising the steps of:
providing an adhesive composition comprising, per 100 parts by mass of a curable resin (A), 1 part by mass or more and 80 parts by mass or less of substantially spherical organic particles (B); and
applying the adhesive composition to a surface of an adherend in an application amount of 5 mg/cm² or more and 500 mg/cm² or less.

8. A method for producing an adhesive layer, comprising the steps of:
providing an adhesive composition comprising, per 100 parts by mass of a curable resin (A), 1 part by mass or more and 80 parts by mass or less of substantially spherical organic particles (B);
applying the adhesive composition to a surface of an adherend in an application amount of 5 mg/cm² or more and 500 mg/cm² or less; and
curing the adhesive composition.

9. A method for producing a laminate in which at least two adherends are adhered, comprising the steps of:
providing an adhesive composition comprising, per 100 parts by mass of a curable resin (A), 1 part by mass or more and 80 parts by mass or less of substantially spherical organic particles (B);
applying the adhesive composition to a surface of an adherend in an application amount of 5 mg/cm² or more and 500 mg/cm² or less, and placing the adhesive composition between the at least two adherends; and
curing the adhesive composition.
